# EUROPEAN PATENT SPECIFICATION

(11) **EP 4 398 453 B1**
(45) Date of publication and mention of the grant of the patent: **07.10.2026**
(21) Application number: 23802137.2
(22) Date of filing: 16.08.2023
(51) Int. Cl.: H02J 50/10, H02J 7/00, H02J 7/34, H02J 7/90, H02M 3/155

(54) **ELECTRONIC DEVICE COMPRISING SWITCHING CHARGER AND OPERATION METHOD THEREOF**
ELEKTRONISCHE VORRICHTUNG MIT SCHALTLADEGERÄT UND BETRIEBSVERFAHREN DAFÜR
DISPOSITIF ÉLECTRONIQUE COMPRENANT UN CHARGEUR DE COMMUTATION ET SON PROCÉDÉ DE FONCTIONNEMENT

(30) Priority: 18.11.2022 KR 20220155188; 08.12.2022 KR 20220170727
(43) Date of publication of application: 10.07.2024
(73) Proprietor: Samsung Electronics Co., Ltd., Suwon-si, Gyeonggi-do 16677 (KR)
(72) Inventor: CHOI, Hangseok, Suwon-si, Gyeonggi-do 16677 (KR); KANG, Sangwoo, Suwon-si, Gyeonggi-do 16677 (KR)
(74) Representative: HGF
(86) International application number: PCT/KR2023/012080
(87) International publication number: WO 2024/106699

(56) References cited:
- WO-A1-2022/159927
- KR-A- 20170 093 549
- KR-A- 20180 065 460
- KR-A- 20190 054 334
- US-A1- 2018 375 362
- US-A1- 2019 148 968
- US-A1- 2021 384 749

## Description

### [Technical Field]

Embodiments of the present invention relate to an electronic device including a switching charger and a method for operating the same.

### [Background Art]

An electronic device, such as a smartphone, has a wired charging port and a wireless charging port and, depending on operating conditions, receives power through each port to charge the battery or receives power from the battery to supply power to an external device through each port. The electronic device uses the wired charging port or the wireless charging port alone or may supply power to the external device through the wired charging port during wireless charging using the wireless charging port or supply power to the external device through the wireless charging port during battery charging through the wired port. In particular, such multi-use condition requires a control scheme for enabling seamless operation of charging the battery with the switching charger or receiving power from the battery to supply power to a required port depending on the difference in power between the power supplying port and the power receiving port. US 2019/148968 A1 and US 2018/375362 A1 disclose an electronic device including a switching charger connected to a wireless and a wired power reception / transmission interface.

### [Disclosure of Invention]

### [Solution to Problems]

The scope of protection of the present invention is defined by the appended independent claims. Optional features are specified by the dependent claims.

### [Brief Description of Drawings]

FIG. 1 is a view illustrating an electronic device in a network environment according to embodiments;
FIG. 2 is a block diagram illustrating an electronic device according to embodiments;
FIG. 3 is a circuit diagram illustrating an electronic device according to embodiments;
FIG. 4 is a flowchart illustrating an operation method of an electronic device according to embodiments;
FIG. 5 is a flowchart illustrating an operation method of an electronic device according to embodiments;
FIG. 6 is a flowchart illustrating an operation method of an electronic device according to embodiments;
FIG. 7 is a view illustrating operations of an electronic device according to embodiments;
FIG. 8 is a view illustrating operations of an electronic device according to embodiments;
FIG. 9 is a view illustrating operations of an electronic device according to embodiments; and
FIG. 10 is a view illustrating operations of an electronic device according to embodiments.

### [Mode for the Invention]

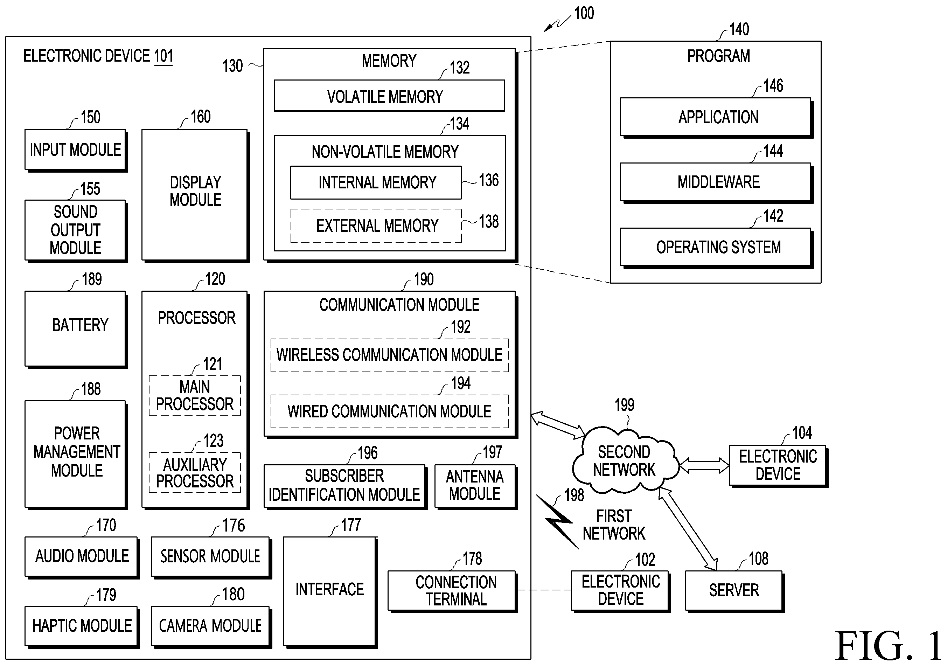

FIG. 1 is a view illustrating an electronic device in a network environment according to embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal According to an embodiment, the display module 160 may include a first display module 351 corresponding to the user's left eye and/or a second display module 353 corresponding to the user's right eye., a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductive body or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

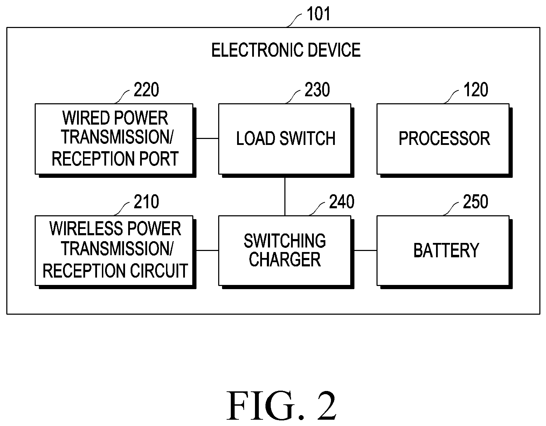

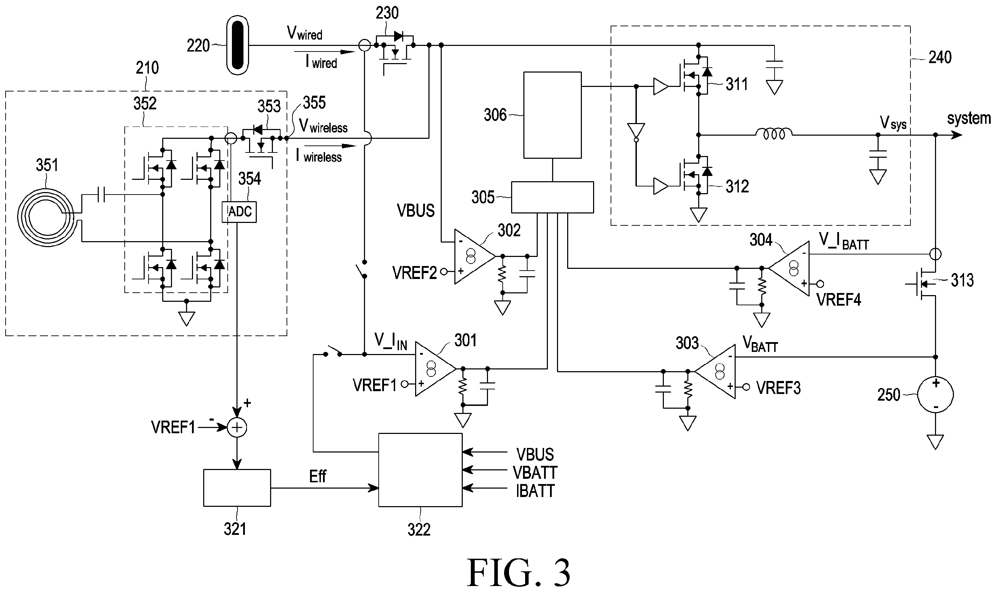

FIG. 2 is a block diagram illustrating an electronic device according to embodiments. FIG. 3 is a circuit diagram illustrating an electronic device according to embodiments.

An exemplary configuration of an electronic device 101 may be described with reference to FIGS. 2 and 3.

Referring to FIG. 2, an electronic device 101 may include a wireless power transmission/reception circuit 210, a wired power transmission/reception port 220, a load switch 230, a switching charger 240, a battery 250, and a processor 120. Hereinafter, the operation of the electronic device 101 may be understood as the operation of at least one processor (e.g., the processor 120) of the electronic device 101.

According to an example of the embodiment, the wireless power transmission/reception circuit 210 may be a circuit for the electronic device 101 to wirelessly transmit or receive power to or from an external electronic device (e.g., the electronic device 102 and/or the electronic device 104 of FIG. 1). Referring to FIG. 3, the wireless power transmission/reception circuit 210 may include a coil 351, a rectifier 352, and a converter 353. When the electronic device 101 wirelessly receives power, the rectifier 352 may rectify AC power received through the coil 351 into DC power and may transfer the rectified power to the converter 353. When the electronic device 101 wirelessly transmits power, the rectifier 352 may convert DC power provided through the converter 353 into AC power and may transfer the AC power to the coil 351. The configuration of the rectifier 352 of the wireless power transmission/reception circuit 210 is not limited (for example, other configurations of the rectifier 352 of the wireless power transmission/reception circuit 210 may also be considered). The converter 353 of the wireless power transmission/reception circuit 210 may be implemented as a linear dropout (LDO), but the configuration of the converter 353 is not limited thereto. Referring to FIG. 3, the wireless power transmission/reception circuit 210 may include an analog-to-digital converter (ADC) 354. The ADC 354 may convert analog information about the magnitude of power (e.g., the magnitude of current) between the rectifier 352 and the converter 353 (for example, analog information transmitted between the rectifier 352 and the converter 353) into digital information. For example, when power is transferred from the rectifier 352 to the converter 353, the ADC 354 may convert the magnitude of power (e.g., the magnitude of current) transferred from the rectifier 352 to the converter 353 into digital information that is a positive value. For example, when power is transferred from the converter 353 to the rectifier 352, the ADC 354 may convert the magnitude of power (e.g., the magnitude of current) transferred from the converter 353 to the rectifier 352 into digital information that is a negative value. The ADC 354 may convert analog information about the magnitude of power (e.g., the magnitude of current) between the rectifier 352 and the converter 353 into digital information.

According to an example of the embodiment, the wired power transmission/reception port 220 may be a port for the electronic device 101 to wiredly transmit or receive power to or from an external electronic device (e.g., the electronic device 102 of FIG. 1). The electronic device 101 may be electrically connected to an external electronic device (e.g., the electronic device 102 of FIG. 1) through the wired power transmission/reception port 220. The electronic device 101 may transmit power to an external electronic device (e.g., the electronic device 102 of FIG. 1) through the wired power transmission/reception port 220. The electronic device 101 may receive power from the external electronic device (e.g., the electronic device 102 of FIG. 1) through the wired power transmission/reception port 220.

According to an example of the embodiment, referring to FIG. 3, the load switch 230 may be electrically connected to the wired power transmission/reception port 220. Through the load switch 230, power provided from the wired power transmission/reception port 220 may be transferred to the switching charger 240 and/or the wireless power transmission/reception circuit 210. Power provided from the switching charger 240 may be transferred to the wired power transmission/reception port 220 through the load switch 230. Power provided from the wireless power transmission/reception circuit 210 may be transferred to the wired power transmission/reception port 220 through the load switch 230. The processor 120 may control the transfer of power between the wired power transmission/reception port 220 and the switching charger 240 by controlling the load switch 230. The processor 120 may control the transfer of power between the wired power transmission/reception port 220 and the wireless power transmission/reception circuit 210 by controlling the load switch 230. The configuration of the load switch 230 is not limited. The processor 120 may identify the magnitude of the current flowing from the wired power transmission/reception port 220 to the load switch 230 or the magnitude of the current flowing from the load switch 230 to the wired power transmission/reception port 220. For example, the processor 120 may identify the magnitude of the current flowing through the load switch 230 by using a current mirror. The processor 120 may identify the voltage of the output end of the load switch 230 electrically connected to the switching charger 240. The identification of current and/or voltage is described below. According to an embodiment (not shown), the load switch 230 may be electrically connected to the wireless power transmission/reception circuit 210. Through the load switch 230, power provided from the wireless power transmission/reception circuit 210 may be transferred to the switching charger 240 and/or the wired power transmission/reception port 220. Power provided from the switching charger 240 may be transferred to the wireless power transmission/reception circuit 210 through the load switch 230. Power provided from the wired power transmission/reception port 220 may be transferred to the wireless power transmission/reception circuit 210 through the load switch 230. The processor 120 may control the transfer of power between the wireless power transmission/reception circuit 210 and the switching charger 240 by controlling the load switch 230.

According to an example of the embodiment, the switching charger 240 may be electrically connected to the load switch 230 and the wireless power transmission/reception circuit 210. Referring to FIG. 3, the switching charger 240 may be connected to the wired power transmission/reception port 220 through the load switch 230. Referring to FIG. 3, the wireless power transmission/reception circuit 210 and the switching charger 240 may be directly electrically connected without a load switch. For example, the switching charger 240 may include a first switch 311 and a second switch 312. FIG. 3 is exemplary, and the configuration of the switching charger 240 is not limited. The processor 120 may control the switching charger 240 (e.g., the first switch 311 and/or the second switch 312 of the switching charger 240). According to an embodiment, the electronic device 101 may include a third switch 313 between the switching charger 240 and the battery 250. The electronic device 101 (e.g., the processor 120) may charge the battery 250 through the switching charger 240, based on power received through the wired power transmission/reception port 220 and/or the wireless power transmission/reception circuit 210. The electronic device 101 (e.g., the processor 120) may transfer power provided from the battery 250 to the wired power transmission/reception port 220 and/or the wireless power transmission/reception circuit 210 through the switching charger 240. The processor 120 may identify the voltage of the battery 250. The processor 120 may identify a current between the switching charger 240 and the battery 250. The identification of current and/or voltage is described below.

According to an example of the embodiment, the electronic device 101 may include at least one error amplifier (e.g., 301, 302, 303, or 304). The at least one error amplifier (e.g., 301, 302, 303, or 304) may output an error value by comparing the magnitude of the current or voltage with a designated reference value. Referring to FIG. 3, e.g., the first error amplifier 301 may output a first error value by comparing a current (e.g., a current between the wired power transmission/reception port 220 and the load switch 230) (e.g., V_I_{IN} of FIG. 3) input to the input end of the load switch 230 with a reference value (e.g., a first reference value) (e.g., VREF1 of FIG. 3). For example, the second error amplifier 302 may output the second error value by comparing the voltage at the output end of the load switch 230 (e.g., the voltage at the end toward the switching charger 240 of two opposite ends of the load switch 230) (e.g., VBUS of FIG. 3) with a reference value (e.g., the second reference value) (e.g., VREF2 of FIG. 3). For example, the third error amplifier 303 may output the third error value by comparing the voltage (e.g., V_{BATT} of FIG. 3) of the battery 250 with a reference value (e.g., the third reference value) (e.g., VREF3 of FIG. 3). For example, the fourth error amplifier 304 may output the fourth error value by comparing the current (e.g., V_I_{BATT} of FIG. 3) between the switching charger 240 and the battery 250 with a reference value (e.g., the fourth reference value) (e.g., VREF4 of FIG. 3). For example, the reference values (e,g,, the first reference value, second reference value, third reference value, and fourth reference value) may be values which are stored in a memory of the electronic device 101 or in a memory of a connected device or server. For example, the reference values may be stored in look-up tables or a database or the like.

According to an example of the embodiment, the electronic device 101 may include a minimum selector 305. The minimum selector 305 may select one error value from among at least one error value (for example, the first error value, the second error value, the third error value, and the fourth error value) provided by the at least one error amplifier (e.g., 301, 302, 303, or 304). For example, the minimum selector 305 may select the smallest error value from among at least one error value provided by the at least one error amplifier (e.g., 301, 302, 303, or 304). The processor 120 may control the switching charger 240 based on an error value (e.g., a minimum error value) selected by the minimum selector 305 from the at least one error value provided by the at least one error amplifier (e.g., 301, 302, 303, or 304). For example, the processor 120 may control the switching charger 240 through a pulse width modulation (PWM) logic 306 based on the error value (e.g., the minimum error value) selected by the minimum selector 305. The PWM logic 306 may be a component for PWM control of the switching charger 240. The implementation method of PWM logic 306 is not limited. The PWM logic 306 may be included in the processor 120.

According to an example of the embodiment, the electronic device 101 may include an efficiency adjuster 321. The implementation method of the efficiency adjuster 321 is not limited. For example, the efficiency adjuster 321 may be included in the processor 120. For example, the processor 120 may adjust the expected efficiency of the switching charger 240 (for example, the expected efficiency may be an efficiency value or factor) using the efficiency adjuster 321. According to an embodiment, the electronic device 101 may include a wireless current predictor 322. The implementation method of the wireless current predictor 322 is not limited. For example, the wireless current predictor 322 may be included in the processor 120. For example, the processor 120 may predict (or calculate) the current at the output end 355 of the wireless power transmission/reception circuit 210 using the wireless current predictor 322. Prediction (or calculation) of the current at the output end 355 of the wireless power transmission/reception circuit 210 is described below.

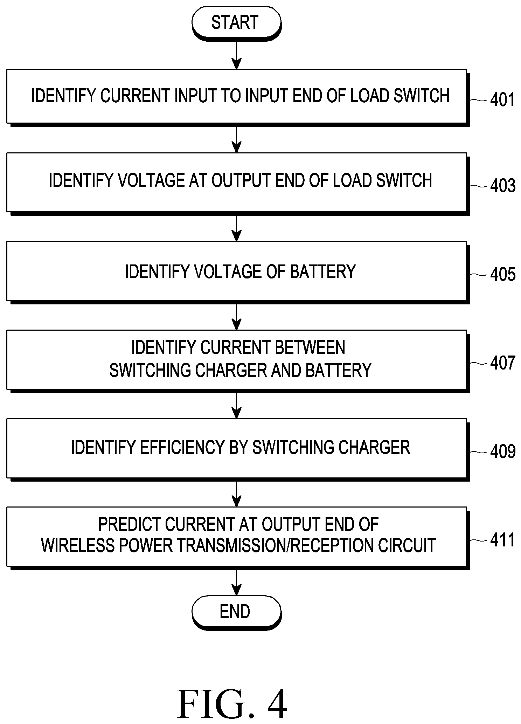

FIG. 4 is a flowchart illustrating an operation method of an electronic device according to embodiments.

At least some of the operations of FIG. 4 may be omitted. The operation order of the operations of FIG. 4 may be changed. Operations other than the operations of FIG. 4 may be performed before, during, or after the operations of FIG. 4.

Referring to FIG. 4, in operation 401, the electronic device 101 (e.g., the processor 120) may identify a current (e.g., a current between the wired power transmission/reception port 220 and the load switch 230) input to the input end of the load switch 230. For example, the electronic device 101 (e.g., the processor 120) may identify the magnitude of the current (e.g., the I_{wired} of FIG. 3) flowing through the load switch 230 by using the current mirror. For example, the electronic device 101 (e.g., the processor 120) may identify the magnitude of the current flowing from the wired power transmission/reception port 220 to the load switch 230 or the current flowing from the load switch 230 to the wired power transmission/reception port 220. For example, when a current flows from the wired power transmission/reception port 220 to the load switch 230, the electronic device 101 (e.g., the processor 120) may identify the value of the current as a positive value. For example, when a current flows from the load switch 230 to the wired power transmission/reception port 220, the electronic device 101 (e.g., the processor 120) may identify the value of the current as a negative value.

In operation 403, the electronic device 101 (e.g., the processor 120) may identify the voltage at the output end of the load switch 230. For example, the electronic device 101 (e.g., the processor 120) may identify the voltage (e.g., VBUS of FIG. 3) at the end of two opposite ends of the load switch 230 toward the switching charger 240.

In operation 405, the electronic device 101 (e.g., the processor 120) may identify the voltage (e.g., V_{BATT} of FIG. 3) of the battery 250 (for example, the voltage of the battery 250 may be measured).

In operation 407, the electronic device 101 (e.g., the processor 120) may identify a current between the switching charger 240 and the battery 250 (for example the current between the switching charger 240 and the battery 250 may be measured). For example, when a current flows from the switching charger 240 to the battery 250, the electronic device 101 (e.g., the processor 120) may identify the value of the current as a positive value. For example, when a current flows from the battery 250 to the switching charger 240, the electronic device 101 (e.g., the processor 120) may identify the value of the current as a negative value.

In operation 409, the electronic device 101 (e.g., the processor 120) may identify the efficiency of the switching charger 240 (for example, the efficiency may be an efficiency value or factor). The efficiency of the switching charger 240 may be the magnitude of the power output from the switching charger 240 relative to the magnitude of the power input to the switching charger 240 (for example, the efficiency may be a value or factor corresponding to the magnitude of the power input to the switching charger 240). For example, the efficiency (e.g., expected efficiency) of the switching charger 240 may be predicted in a designated range (e.g., 0.8 to 0.95) depending on the magnitude of the current (e.g., the current between the switching charger 240 and the battery 250) output from the switching charger 240 and/or the magnitude of the voltage (e.g., the voltage at the end toward the switching charger 240 of the two opposite ends of the load switch 230) input to the switching charger 240. For example, the electronic device 101 (e.g., the processor 120) may identify (or predict or determine or calculate) the efficiency (e.g., expected efficiency) of the switching charger 240 according to the magnitude of the current output from the switching charger 240 (e.g., the current between the switching charger 240 and the battery 250) and/or the magnitude of the voltage input to the switching charger 240 (e.g., the voltage at the end toward the switching charger 240 of the two opposite ends of the load switch 230).

In operation 411, the electronic device 101 (e.g., the processor 120) may predict (or estimate or determine or calculate) the current at the output end 355 of the wireless power transmission/reception circuit 210. For example, the electronic device 101 (e.g., the processor 120) may predict (or estimate or determine or calculate) the current at the output end 355 of the wireless power transmission/reception circuit 210, based on the current (e.g., the current between the wired power transmission/reception port 220 and the load switch 230) input to the input end of the load switch 230 in operation 401, the voltage at the output end of the load switch 230 in operation 403, the voltage at the battery 250 in operation 405, the current between the switching charger 240 and the battery 250 in operation 407, and the efficiency (e.g., expected efficiency) of the switching charger 240 in operation 409. For example, the electronic device 101 (e.g., the processor 120) may predict (or estimate or determine or calculate) the current at the output end 355 of the wireless power transmission/reception circuit 210 by Equation 1. [Equation 1] ${{I}_{WIRELESS}}^{EST} = \frac{{V}_{BATT}}{{V}_{BUS}} \frac{{I}_{BATT}}{{E}_{ff}} - {I}_{WIRED}$

In Equation 1, I_{WIRED} may be the current (e.g., the current between the wired power transmission/reception port 220 and the load switch 230) input to the input end of the load switch 230 in operation 401. In Equation 1, V_{BUS} may be the voltage at the output end of the load switch 230 in operation 403. In Equation 1, V_{BATT} may be the voltage of the battery 250 in operation 405. In Equation 1, I_{BATT} may be the current between the switching charger 240 and the battery 250 in operation 407. In Equation 1, E_{ff} may be efficiency (e.g., expected efficiency) (for example, an efficiency value or factor) by the switching charger 240 of operation 409. In Equation 1, I_{WIRELESS}^{EST} may be a predicted value (or calculated value) of the current at the output end 355 of the wireless power transmission/reception circuit 210. For example, when I_{WIRELESS}^{EST} is a positive value, a current may flow from the converter 353 of the wireless power transmission/reception circuit 210 to the output end 355. For example, when I_{WIRELESS}^{EST} is a negative value, a current may flow from the output end 355 of the wireless power transmission/reception circuit 210 to the converter 353. The electronic device 101 (e.g., the processor 120) may control the current input to the switching charger 240 based on the predicted (or calculated or estimated or determined) current at the output end 355 of the wireless power transmission/reception circuit 210.

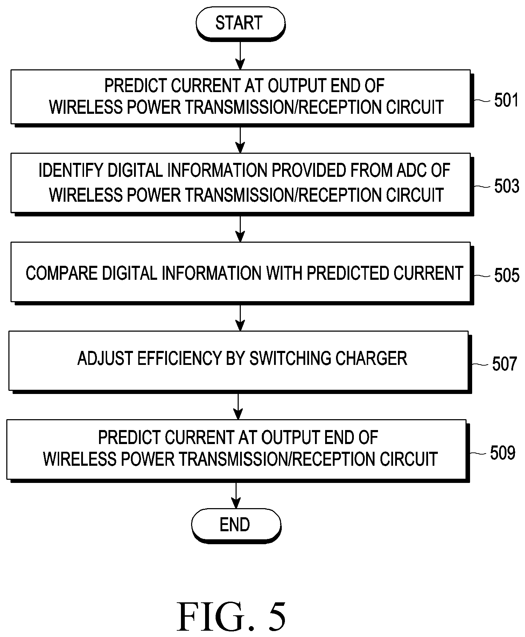

FIG. 5 is a flowchart illustrating an operation method of an electronic device according to embodiments.

At least some of the operations of FIG. 5 may be omitted. The operation order of the operations of FIG. 5 may be changed. Operations other than the operations of FIG. 5 may be performed before, during, or after the operations of FIG. 5. At least some of the operations of FIG. 5 may correspond to at least some of the operations of FIG. 4. The operations of FIG. 5 may be performed organically with the operations of FIG. 4.

Referring to FIG. 5, in operation 501, the electronic device 101 (e.g., the processor 120) may predict (or calculate or estimate or determine) the current at the output end 355 of the wireless power transmission/reception circuit 210. Operation 501 may correspond to operation 411 of FIG. 4.

In operation 503, the electronic device 101 (e.g., the processor 120) may identify (or receive) digital information provided from the ADC 354 of the wireless power transmission/reception circuit 210. For example, the ADC 354 may convert analog information about the magnitude of the power (e.g., the magnitude of the current) between the rectifier 352 and the converter 353 into digital information. The electronic device 101 (e.g., the processor 120) may identify (or receive) digital information (e.g., information about the magnitude of the current between the rectifier 352 and the converter 353) provided from the ADC 354 of the wireless power transmission/reception circuit 210.

In operation 505, the electronic device 101 (e.g., the processor 120) may compare the digital information in operation 503 with the predicted (or calculated or determined or estimated) current in operation 501. For example, the electronic device 101 (e.g., the processor 120) may compare the magnitude of the current between the rectifier 352 and the converter 353 based on the digital information in operation 503 with the predicted (or calculated or determined or estimated) magnitude of the current in operation 501.

In operation 507, the electronic device 101 (e.g., the processor 120) may adjust (or calibrate) the efficiency (e.g., expected efficiency) of the switching charger 240 based on the result of operation 505. For example, the electronic device 101 (e.g., the processor 120) may adjust the efficiency (e.g., expected efficiency) of the switching charger 240 based on the difference between the magnitude of the current between the rectifier 352 and the converter 353 based on the digital information in operation 503 and the predicted (or calculated) magnitude of the current in operation 501.

In operation 509, the electronic device 101 (e.g., the processor 120) may predict (e.g., re-predict) the current at the output end 355 of the wireless power transmission/reception circuit 210, based on the efficiency (e.g., expected efficiency) of the switching charger 240 adjusted in operation 507. For example, the electronic device 101 (e.g., the processor 120) may re-predict (or recalculate) the current at the output end 355 of the wireless power transmission/reception circuit 210 according to Equation 1, based on the adjusted efficiency (e.g., expected efficiency) of the switching charger 240 in operation 507.

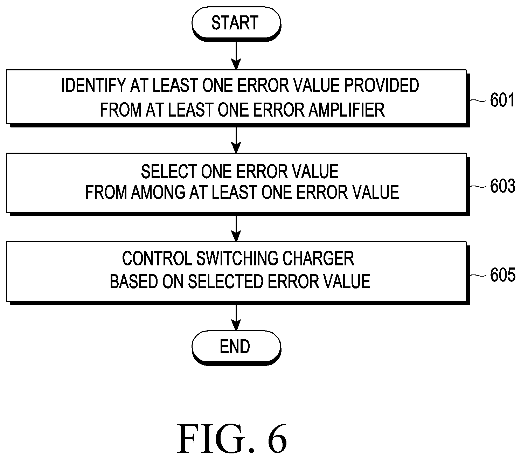

FIG. 6 is a flowchart illustrating an operation method of an electronic device according to embodiments.

At least some of the operations of FIG. 6 may be omitted. The operation order of the operations of FIG. 6 may be changed. Operations other than the operations of FIG. 6 may be performed before, during, or after the operations of FIG. 6. At least some of the operations of FIG. 6 may correspond to at least some of the operations of FIG. 4 and/or 5. The operations of FIG. 6 may be performed organically with the operations of FIG. 4 and/or FIG. 5.

Referring to FIG. 6, in operation 601, the electronic device 101 (e.g., the processor 120) may identify (or calculate or estimate or determine) at least one error value provided by at least one error amplifier (e.g., 301, 302, 303, or 304). For example, the electronic device 101 (e.g., the processor 120) may identify a first error value output from the first error amplifier 301 that compares a current (e.g., a current between the wired power transmission/reception port 220 and the load switch 230) (e.g., V_IIN of FIG. 3) input to the input end of the load switch 230 with a reference value (e.g., a first reference value) (e.g., VREF1 of FIG. 3). For example, the electronic device 101 (e.g., the processor 120) may identify the second error value output from the second error amplifier 302 that compares the voltage at the output end of the load switch 230 (e.g., the voltage at the end toward the switching charger 240 of the two opposite ends of the load switch 230) (e.g., the VBUS of FIG. 3) with a reference value (e.g., the second reference value) (e.g., the VREF2 of FIG. 3). For example, the electronic device 101 (e.g., the processor 120) may identify the third error value output from the third error amplifier 303 that compares the voltage (e.g., the VBATT of FIG. 3) of the battery 250 with a reference value (e.g., the third reference value) (e.g., the VREF3 of FIG. 3). For example, the electronic device 101 (e.g., the processor 120) may identify a fourth error value output from the fourth error amplifier 304 that compares the current (e.g., V_I_{BATT} of FIG. 3) between the switching charger 240 and the battery 250 with a reference value (e.g., a fourth reference value) (e.g., VREF4 of FIG. 3).

In operation 603, the electronic device 101 (e.g., the processor 120) may select one error value from among the at least one error value (e.g., a first error value, a second error value, a third error value, and a fourth error value) provided by the at least one error amplifier (e.g., 301, 302, 303, and 304). For example, the electronic device 101 (e.g., the processor 120) may select one error value (e.g., the minimum error value) by the minimum selector 305 from among the at least one error value (e.g., the first error value, the second error value, the third error value, and the fourth error value) provided by the at least one error amplifier (e.g., 301, 302, 303, or 304).

In operation 605, the electronic device 101 (e.g., the processor 120) may control the switching charger 240 based on the error value (e.g., the minimum error value) selected in operation 603. For example, the electronic device 101 (e.g., the processor 120) may control the switching charger 240 through pulse width modulation (PWM) logic 306 based on the error value (e.g., the minimum error value) selected by the minimum selector 305.

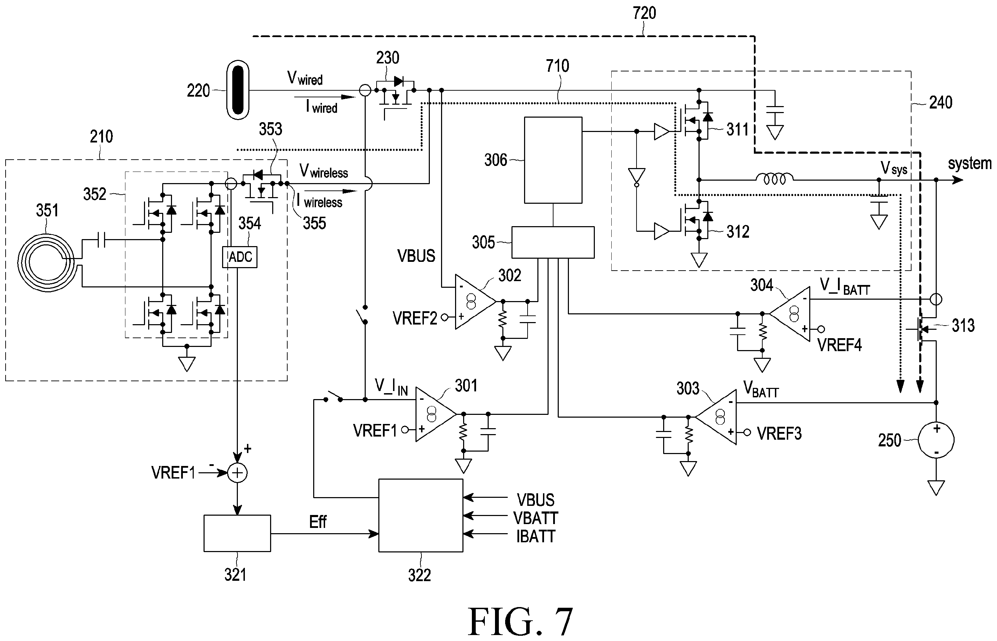

FIG. 7 is a view illustrating operations of an electronic device according to embodiments.

Referring to FIG. 7, charging of the battery 250 of the electronic device 101 may be described.

Referring to FIG. 7, the electronic device 101 (e.g., the processor 120) may charge the battery 250 based on the power 720 input through the wired power transmission/reception port 220 and/or the power 710 received through the wireless power transmission/reception circuit 210. For example, the electronic device 101 (e.g., the processor 120) may charge the battery 250 through the switching charger 240, based on the power 720 input through the wired power transmission/reception port 220. For example, the electronic device 101 (e.g., the processor 120) may charge the battery 250 through the switching charger 240, based on the power 710 received through the wireless power transmission/reception circuit 210. The electronic device 101 (e.g., the processor 120) may simultaneously or separately receive the power 720 through the wired power transmission/reception port 220 and the power 710 through the wireless power transmission/reception circuit 210, and may charge the battery 250 based on the received power (e.g., 710 and/or 720). The electronic device 101 (e.g., the processor 120) may control the switching charger 240, the load switch 230, and the wireless power transmission/reception circuit 210 to charge the battery 250 based on the power 720 input through the wired power transmission/reception port 220 and/or the power 710 received through the wireless power transmission/reception circuit 210.

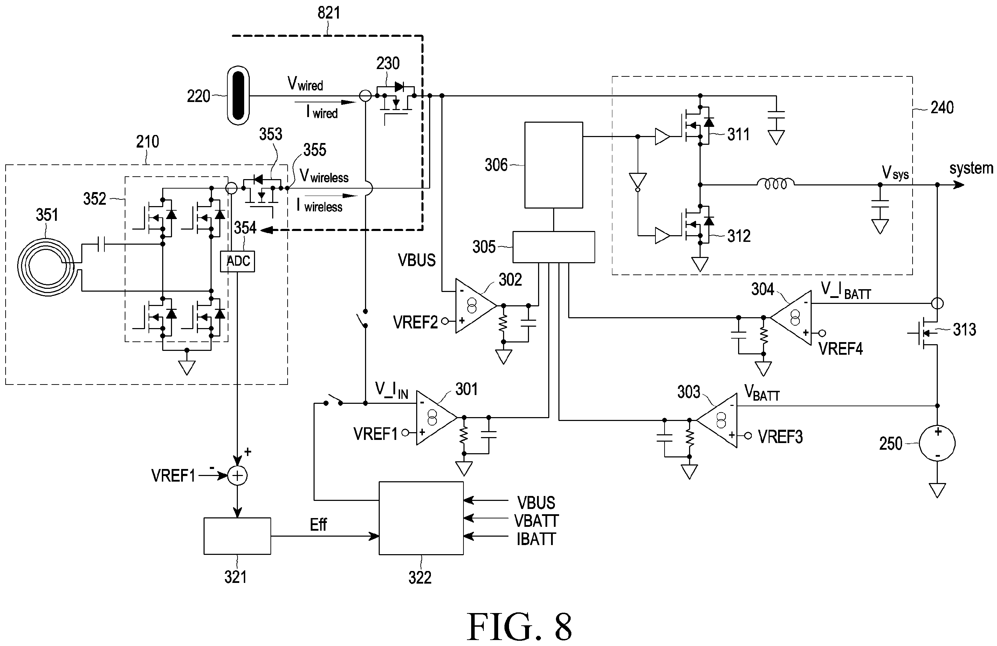

FIG. 8 is a view illustrating operations of an electronic device according to embodiments.

Referring to FIG. 8, an embodiment of wirelessly transmitting power to an external device (e.g., the electronic device 102 and/or the electronic device 104 of FIG. 1) through the wireless power transmission/reception circuit 210 based on power input through the wired power transmission/reception port 220 may be described.

Referring to FIG. 8, the electronic device 101 (e.g., the processor 120) may provide power to the wireless power transmission/reception circuit 210, based on the power 821 input through the wired power transmission/reception port 220. The electronic device 101 (e.g., the processor 120) may wirelessly transmit power to another external device (e.g., the electronic device 104 of FIG. 1) through the wireless power transmission/reception circuit 210 while wiredly receiving power from the external device (e.g., the electronic device 102 of FIG. 1) through the wired power transmission/reception port 220. The electronic device 101 (e.g., the processor 120) may control the switching charger 240, the load switch 230, and the wireless power transmission/reception circuit 210 to provide power to the wireless power transmission/reception circuit 210, based on the power 821 input through the wired power transmission/reception port 220. In this case, the electronic device 101 (e.g., the processor 120) may provide power from the switching charger 240 to the wireless power transmission/reception circuit 210, based on the power provided from the battery 250.

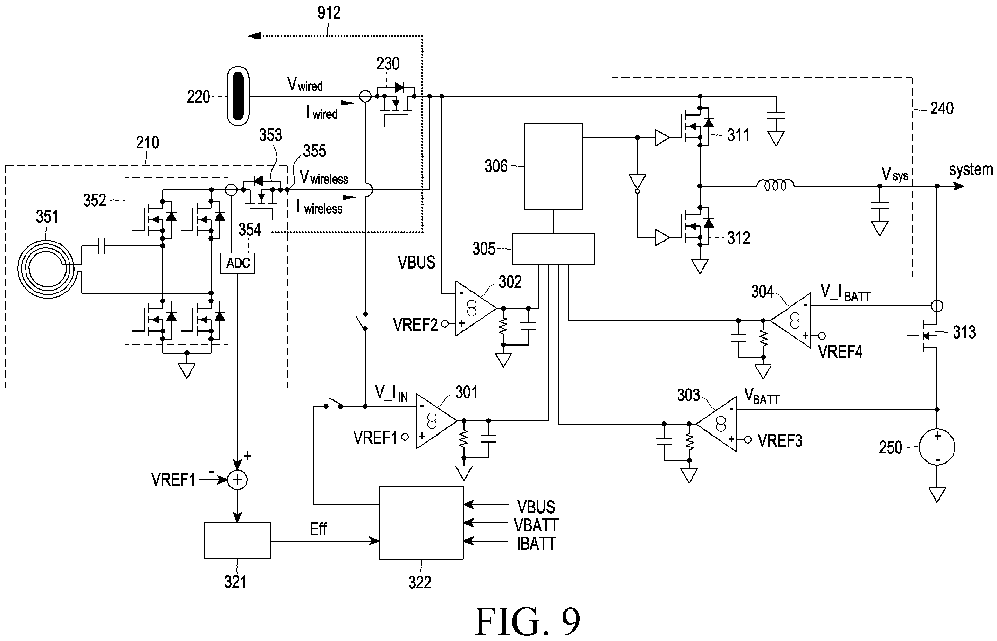

FIG. 9 is a view illustrating operations of an electronic device according to embodiments.

Referring to FIG. 9, an embodiment of wiredly transmitting power to an external device (e.g., the electronic device 102 of FIG. 1) through the wired power transmission/reception port 220 based on power received through the wireless power transmission/reception circuit 210 may be described.

Referring to FIG. 9, the electronic device 101 (e.g., the processor 120) may provide power to the wired power transmission/reception port 220, based on the power 912 received through the wireless power transmission/reception circuit 210. The electronic device 101 (e.g., the processor 120) may wiredly transmit power to another external device (e.g., the electronic device 102 of FIG. 1) through the wired power transmission/reception port 220 while wirelessly receiving power from the external device (e.g., the electronic device 104 of FIG. 1) through the wireless power transmission/reception circuit 210. The electronic device 101 (e.g., the processor 120) may control the switching charger 240, the load switch 230, and the wireless power transmission/reception circuit 210 to provide power to the wired power transmission/reception port 220, based on the power 912 received through the wireless power transmission/reception circuit 210. In this case, the electronic device 101 (e.g., the processor 120) may provide power from the switching charger 240 to the wired power transmission/reception port 220, based on the power provided from the battery 250.

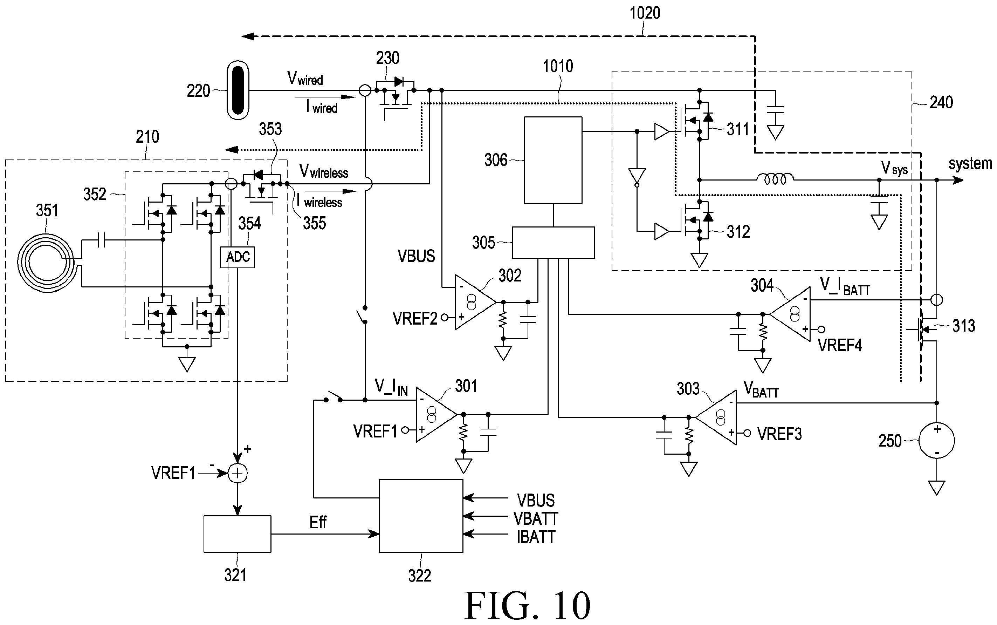

FIG. 10 is a view illustrating operations of an electronic device according to embodiments.

Referring to FIG. 10, an embodiment of providing power to the wired power transmission/reception port 220 and/or the wireless power transmission/reception circuit 210 based on power provided from the battery 250 may be described.

Referring to FIG. 10, the electronic device 101 (e.g., the processor 120) may provide power to the wired power transmission/reception port 220 and/or the wireless power transmission/reception circuit 210, based on power provided from the battery 250. For example, the electronic device 101 (e.g., the processor 120) may provide power 1020 to the wired power transmission/reception port 220, based on power provided from the battery 250. For example, the electronic device 101 (e.g., the processor 120) may provide power 1010 to the wireless power transmission/reception circuit 210, based on power provided from the battery 250. The electronic device 101 (e.g., the processor 120) may simultaneously or separately provide power to the wired power transmission/reception port 220 and the wireless power transmission/reception circuit 210, based on power provided from the battery 250. The electronic device 101 (e.g., the processor 120) may control the switching charger 240, the load switch 230, and the wireless power transmission/reception circuit 210 to provide power to the wired power transmission/reception port 220 and/or the wireless power transmission/reception circuit 210, based on power provided from the battery 250.

It may be understood by one of ordinary skill in the art that embodiments described herein may be applied mutually and organically within the applicable scope. For example, one of ordinary skill in the art may understand that at least some operations of an embodiment of the disclosure may be omitted and applied and that at least some operations of an embodiment and at least some operations of another embodiment may be organically combined and applied.

According to an embodiment, an electronic device 101 may comprise a wireless power transmission/reception circuit 210, a wired power transmission/reception port 220, a load switch 230 electrically connected to the wired power transmission/reception port 220, a switching charger 240 electrically connected to the load switch 230 and the wireless power transmission/reception circuit 210, a battery 250 electrically connected to the switching charger 240, and a processor 120. The processor 120 may be configured to, based on a first current input to an input end of the load switch 230, a first voltage of an output end of the load switch 230, a second voltage of the battery 250, a second current between the switching charger 240 and the battery 250, and efficiency of the switching charger, predict a third current of an output end 355 of the wireless power transmission/reception circuit 210.

According to an embodiment, the processor 120 may be configured to adjust the efficiency by comparing digital information provided from an analog-to-digital converter (ADC) 354 included in the wireless power transmission/reception circuit 210 with the predicted third current.

According to an embodiment, the processor 120 may be configured to re-predict the third current at the output end 355 of the wireless power transmission/reception circuit 210 based on the adjusted efficiency.

According to an embodiment, the electronic device 101 may comprise at least one error amplifier 301, 302, 303, or 304, and a minimum selector 305. The processor 120 may be configured to control the switching charger 240 based on an error value selected by the minimum selector 305 among at least one error value provided from the at least one error amplifier 301, 302, 303, or 304.

According to an embodiment, the at least one error amplifier 301, 302, 303, or 304 may include a first error amplifier 301 based on the first current input to the input end of the load switch 230. The at least one error amplifier 301, 302, 303, or 304 may include a second error amplifier 302 based on the first voltage at the output end of the load switch 230. The at least one error amplifier 301, 302, 303, or 304 may include a third error amplifier 303 based on the second voltage of the battery 250. The at least one error amplifier 301, 302, 303, or 304 may include a fourth error amplifier 304 based on the second current between the switching charger 240 and the battery 250.

According to an embodiment, the minimum selector 305 may be configured to select a smallest error value among the at least one error value.

According to an embodiment, the processor 120 may be configured to control the switching charger 240, the load switch 230, and the wireless power transmission/reception circuit 210 to charge the battery 250 based on power input through the wired power transmission/reception port 220 and/or power received through the wireless power transmission/reception circuit 210.

According to an embodiment, the processor 120 may be configured to control the switching charger 240, the load switch 230, and the wireless power transmission/reception circuit 210 to provide power to the wireless power transmission/reception circuit 210 based on power input through the wired power transmission/reception port 220.

According to an embodiment, the processor 120 may be configured to control the switching charger 240, the load switch 230, and the wireless power transmission/reception circuit 210 to provide power to the wired power transmission/reception port 220 based on power received through the wireless power transmission/reception circuit 210.

According to an embodiment, the processor 120 may be configured to control the switching charger 240, the load switch 230, and the wireless power transmission/reception circuit 210 to provide power to the wired power transmission/reception port 220 and/or the wireless power transmission/reception circuit 210 based on power provided from the battery 250.

According to an embodiment, a method for operating an electronic device 101 may comprise identifying a first current input to an input end of a load switch 230 electrically connected to a wired power transmission/reception port 220 of the electronic device 101. The method may comprise identifying a first voltage at an output end of the load switch 230. The method may comprise identifying a second voltage of a battery 250 of the electronic device 101. The method may comprise identifying a second current between a switching charger 240 of the electronic device 101 and the battery 250. The switching charger 240 may be electrically connected to a wireless power transmission/reception circuit 210 of the electronic device 101 and the load switch 230. The method may comprise identifying efficiency of the switching charger 240. The method may comprise predicting a third current at an output end 355 of the wireless power transmission/reception circuit 210 based on the first current, the first voltage, the second voltage, the second current, and the efficiency.

According to an embodiment, the method may comprise identifying digital information provided from an ADC 354 included in the wireless power transmission/reception circuit 210. The method may comprise comparing the digital information with the predicted third current. The method may comprise adjusting the efficiency based on a result of the comparison.

According to an embodiment, the method may comprise re-predicting the third current at the output end 355 of the wireless power transmission/reception circuit 210 based on the adjusted efficiency.

According to an embodiment, the method may comprise selecting one error value among at least one error value provided from at least one error amplifier 301, 302, 303, or 304 of the electronic device 101 using a minimum selector 305 of the electronic device 101. The method may comprise controlling the switching charger 240 based on the selected error value.

According to an embodiment, the at least one error amplifier 301, 302, 303, or 304 may include a first error amplifier 301 based on the first current input to the input end of the load switch 230. The at least one error amplifier 301, 302, 303, or 304 may include a second error amplifier 302 based on the first voltage at the output end of the load switch 230. The at least one error amplifier 301, 302, 303, or 304 may include a third error amplifier 303 based on the second voltage of the battery 250. The at least one error amplifier 301, 302, 303, or 304 may include a fourth error amplifier 304 based on the second current between the switching charger 240 and the battery 250.

According to an embodiment, selecting the one error value may include selecting a smallest error value among the at least one error value.

According to an embodiment, the method may comprise charging the battery 250 based on power input through the wired power transmission/reception port 220 and/or power received through the wireless power transmission/reception circuit 210.

According to an embodiment, the method may comprise providing power to the wireless power transmission/reception circuit 210 based on power input through the wired power transmission/reception port 220.

According to an embodiment, the method may comprise providing power to the wired power transmission/reception port 220 based on power received through the wireless power transmission/reception circuit 210.

According to an embodiment, the method may comprise providing power to the wired power transmission/reception port 220 and/or the wireless power transmission/reception circuit 210 based on power provided from the battery 250.

According to an embodiment, in a computer-readable recording medium storing instructions configured to perform at least one operation by a processor 120 of an electronic device 101, the at least one operation may include identifying a first current input to an input end of a load switch 230 electrically connected to a wired power transmission/reception port 220 of the electronic device 101. The at least one operation may include identifying a first voltage at an output end of the load switch 230. The at least one operation may include identifying a second voltage of a battery 250 of the electronic device 101. The at least one operation may include identifying a second current between a switching charger 240 of the electronic device 101 and the battery 250. The switching charger 240 may be electrically connected to a wireless power transmission/reception circuit 210 of the electronic device 101 and the load switch 230. The at least one operation may include identifying efficiency of the switching charger 240. The at least one operation may include predicting a third current at an output end 355 of the wireless power transmission/reception circuit 210 based on the first current, the first voltage, the second voltage, the second current, and the efficiency.

According to an embodiment, the method may comprise identifying digital information provided from an ADC 354 included in the wireless power transmission/reception circuit 210. The at least one operation may include comparing the digital information with the predicted third current. The at least one operation may include adjusting the efficiency based on a result of the comparison.

According to an embodiment, the at least one operation may include re-predicting the third current at the output end 355 of the wireless power transmission/reception circuit 210 based on the adjusted efficiency.

According to an embodiment, the at least one operation may include selecting one error value among at least one error value provided from at least one error amplifier 301, 302, 303, or 304 of the electronic device 101 using a minimum selector 305 of the electronic device 101. The at least one operation may include controlling the switching charger 240 based on the selected error value.

According to an embodiment, the at least one error amplifier 301, 302, 303, or 304 may include a first error amplifier 301 based on the first current input to the input end of the load switch 230. The at least one error amplifier 301, 302, 303, or 304 may include a second error amplifier 302 based on the first voltage at the output end of the load switch 230. The at least one error amplifier 301, 302, 303, or 304 may include a third error amplifier 303 based on the second voltage of the battery 250. The at least one error amplifier 301, 302, 303, or 304 may include a fourth error amplifier 304 based on the second current between the switching charger 240 and the battery 250.

According to an embodiment, selecting the one error value may include selecting a smallest error value among the at least one error value.

According to an embodiment, the at least one operation may include charging the battery 250 based on power input through the wired power transmission/reception port 220 and/or power received through the wireless power transmission/reception circuit 210.

According to an embodiment, the at least one operation may include providing power to the wireless power transmission/reception circuit 210 based on power input through the wired power transmission/reception port 220.

According to an embodiment, the at least one operation may include providing power to the wired power transmission/reception port 220 based on power received through the wireless power transmission/reception circuit 210.

According to an embodiment, the at least one operation may include providing power to the wired power transmission/reception port 220 and/or the wireless power transmission/reception circuit 210 based on power provided from the battery 250.

In a first example, an electronic device is provided, the electronic device comprising: a wireless power transmission/reception circuit; a wired power transmission/reception port; a load switch electrically connected to the wired power transmission/reception port; a switching charger electrically connected to the load switch and the wireless power transmission/reception circuit; a battery electrically connected to the switching charger; and a processor, wherein the processor is configured to: identify a first current input to an input end of the load switch; identify a first voltage at an output end of the load switch; identify a second voltage of the battery; identify a second current between the switching charger and the battery; identify an efficiency of the switching charger, wherein the efficiency of the switching charger is the magnitude of the power output from the switching charger relative to the magnitude of the power input to the switching charger; predict a third current at an output end of the wireless power transmission/reception circuit based on the first current input, the first voltage, the second voltage, the second current, and the efficiency of the switching charger.

In a second example, the electronic device of the first example is provided, wherein the processor is configured to adjust the efficiency by comparing digital information provided from an analog-to digital converter, ADC, included in the wireless power transmission/reception circuit with the predicted third current.

In a third example, the electronic device of the second example is provided, wherein the processor is configured to re-predict the third current at the output end of the wireless power transmission/reception circuit based on the adjusted efficiency.

In a fourth example, the electronic device of any one of the first to the third example is provided, comprising: at least one error amplifier; and a minimum selector, wherein the processor is configured to control the switching charger based on an error value selected by the minimum selector among at least one error value provided from the at least one error amplifier.

In a fifth example, the electronic device of the fourth example is provided, wherein the at least one error amplifier includes: a first error amplifier based on the first current input to the input end of the load switch; a second error amplifier based on the first voltage at the output end of the load switch; a third error amplifier based on the second voltage of the battery; and a fourth error amplifier based on the second current between the switching charger and the battery; wherein the minimum selector is configured to select a smallest error value among the at least one error value.

In a sixth example, the electronic device of any one of the first to the fifth example is provided, wherein the processor is configured to control the switching charger, the load switch, and the wireless power transmission/reception circuit to charge the battery based on power input through the wired power transmission/reception port and/or power received through the wireless power transmission/reception circuit.

In a seventh example, the electronic device of any one of the first to the sixth example is provided, wherein the processor is configured to control the switching charger, the load switch, and the wireless power transmission/reception circuit to provide power to the wireless power transmission/reception circuit based on power input through the wired power transmission/reception port.

In an eighth example, the electronic device of any one of the first to the seventh example is provided, wherein the processor is configured to control the switching charger, the load switch, and the wireless power transmission/reception circuit to provide power to the wired power transmission/reception port based on power received through the wireless power transmission/reception circuit.

In a ninth example, the electronic device of any one of the first to the eighth example is provided, wherein the processor is configured to control the switching charger, the load switch, and the wireless power transmission/reception circuit to provide power to the wired power transmission/reception port and/or the wireless power transmission/reception circuit based on power provided from the battery.

In a tenth example, a method for operating an electronic device is provided, the method comprising: identifying a first current input to an input end of a load switch electrically connected to a wired power transmission/reception port of the electronic device; identifying a first voltage at an output end of the load switch; identifying a second voltage of a battery of the electronic device; identifying a second current between a switching charger of the electronic device and the battery, the switching charger being electrically connected to a wireless power transmission/reception circuit of the electronic device and the load switch; identifying an efficiency of the switching charger; and predicting a third current at an output end of the wireless power transmission/reception circuit based on the first current, the first voltage, the second voltage, the second current, and the efficiency of the switching charger.

In an eleventh example, the method of the tenth example is provided, comprising: identifying digital information provided from an ADC 354 included in the wireless power transmission/reception circuit; comparing the digital information with the predicted third current; and adjusting the efficiency based on a result of the comparison.

In a twelfth example, the method of the eleventh example is provided, comprising re-predicting the third current at the output end of the wireless power transmission/reception circuit based on the adjusted efficiency.

In a thirteenth example, the method of any one of the tenth to the twelfth example is provided, comprising: selecting one error value among at least one error value provided from at least one error amplifier of the electronic device using a minimum selector of the electronic device; and controlling the switching charger based on the selected error value.

In a fourteenth example, the method of the thirteenth example is provided, wherein the at least one error amplifier includes: a first error amplifier based on the first current input to the input end of the load switch; a second error amplifier based on the first voltage at the output end of the load switch; a third error amplifier based on the second voltage of the battery; and a fourth error amplifier based on the second current between the switching charger and the battery; wherein selecting the one error value includes selecting a smallest error value among the at least one error value.

In a fifteenth example, the method of any one of the tenth to the fifteenth example is provided, comprising charging the battery based on power input through the wired power transmission/reception port and/or power received through the wireless power transmission/reception circuit.

It should be appreciated that embodiments of the present disclosure and the terms used therein are not intended to limit the technological features set forth herein to particular embodiments and include various changes, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third elementAccording to embodiments, each component of the above-described components may include a single entity or multiple entities. Some of the plurality of entities may be separately disposed in different components. According to embodiments, one or more of the above-described components may be omitted, or one or more other components may be added. Alternatively or additionally, a plurality of components may be integrated into a single component. In such a case, according to various embodiments, the integrated component may still perform one or more functions of each of the plurality of components in the same or similar manner as they are performed by a corresponding one of the plurality of components before the integration. According to embodiments, operations performed by components may be carried out sequentially, in parallel, repeatedly, or heuristically, or one or more of the operations may be executed in a different order or omitted, or one or more other operations may be added.

## Claims

1. An electronic device (101) comprising:
a wireless power transmission/reception circuit (210);
a wired power transmission/reception port (220);
a load switch (230) electrically connected to the wired power transmission/reception port (220);
a switching charger (240) electrically connected to the load switch (230) and the wireless power transmission/reception circuit (210);
a battery (250) electrically connected to the switching charger (240); and
a processor (120),
wherein the processor (120) is configured to:
identify (401) a first current input to an input end of the load switch (230);
identify (403) a first voltage at an output end of the load switch (230);
identify (405) a second voltage of the battery (250);
identify (407) a second current between the switching charger (240) and the battery (250);
**characterised in that**
the processor (120) is further configured to:
identify (409) an efficiency of the switching charger (240), wherein the efficiency of the switching charger (240) is the magnitude of the power output from the switching charger (240) relative to the magnitude of the power input to the switching charger (240);
determine (411) a third current at an output end (355) of the wireless power transmission/reception circuit (210) based on the first current, the first voltage, the second voltage, the second current, and the efficiency of the switching charger (240).

2. The electronic device (101) of claim 1, wherein the processor (120) is configured to adjust the efficiency by comparing digital information provided from an analog-to digital converter, ADC (354), included in the wireless power transmission/reception circuit (210) with the determined third current.

3. The electronic device (101) of claim 2, wherein the processor (120) is configured to redetermine the third current at the output end (355) of the wireless power transmission/reception circuit (210) based on the adjusted efficiency.

4. The electronic device (101) of any one of claims 1 to 3, further comprising:
at least one error amplifier (301; 302; 303; 304); and
a minimum selector (305),
wherein the processor (120) is configured to control the switching charger (240) based on an error value selected by the minimum selector (305) among at least one error value provided from the at least one error amplifier (301; 302; 303; 304).

5. The electronic device (101) of claim 4, wherein the at least one error amplifier (301; 302; 303; 304) includes:
a first error amplifier (301) based on the first current input to the input end of the load switch (230);
a second error amplifier (302) based on the first voltage at the output end of the load switch (230);
a third error amplifier (303) based on the second voltage of the battery (250); and
a fourth error amplifier (304) based on the second current between the switching charger (240) and the battery (250);
wherein the minimum selector (305) is configured to select a smallest error value among the at least one error value.

6. The electronic device (101) of any one of claims 1 to 5, wherein the processor (120) is configured to control the switching charger (240), the load switch (230), and the wireless power transmission/reception circuit (210) to charge the battery (250) based on power input through the wired power transmission/reception port (220) and/or power received through the wireless power transmission/reception circuit (210).

7. The electronic device (101) of any one of claims 1 to 6, wherein the processor (120) is configured to control the switching charger (240), the load switch (230), and the wireless power transmission/reception circuit (210) to provide power to the wireless power transmission/reception circuit (210) based on power input through the wired power transmission/reception port (220).

8. The electronic device (101) of any one of claims 1 to 7, wherein the processor (120) is configured to control the switching charger (240), the load switch (230), and the wireless power transmission/reception circuit (210) to provide power to the wired power transmission/reception port (220) based on power received through the wireless power transmission/reception circuit (210).

9. The electronic device (101) of any one of claims 1 to 8, wherein the processor (120) is configured to control the switching charger (240), the load switch (230), and the wireless power transmission/reception circuit (210) to provide power to the wired power transmission/reception port (220) and/or the wireless power transmission/reception circuit (210) based on power provided from the battery (250).

10. A method for operating an electronic device (101), the method comprising:
identifying (401) a first current input to an input end of a load switch (230) electrically connected to a wired power transmission/reception port (220) of the electronic device (101);
identifying (403) a first voltage at an output end of the load switch (230);
identifying (405) a second voltage of a battery (250) of the electronic device (101);
identifying (407) a second current between a switching charger (240) of the electronic device (101) and the battery (250), the switching charger (240) being electrically connected to a wireless power transmission/reception circuit (210) of the electronic device (101) and the load switch (230);
**characterised by**
identifying (409) an efficiency of the switching charger (240); and
determining (411) a third current at an output end (355) of the wireless power transmission/reception circuit (210) based on the first current, the first voltage, the second voltage, the second current, and the efficiency of the switching charger (240).

11. The method of claim 10, further comprising:
identifying digital information provided from an ADC 354 included in the wireless power transmission/reception circuit (210);
comparing the digital information with the determined third current; and
adjusting the efficiency based on a result of the comparison.

12. The method of claim 11, further comprising re-determining the third current at the output end (355) of the wireless power transmission/reception circuit (210) based on the adjusted efficiency.

13. The method of any one of claims 10 to 12, further comprising:
selecting one error value among at least one error value provided from at least one error amplifier (301; 302; 303; 304) of the electronic device (101) using a minimum selector (305) of the electronic device (101); and
controlling the switching charger (240) based on the selected error value.

14. The method of claim 13, wherein the at least one error amplifier (301; 302; 303; 304) includes:
a first error amplifier (301) based on the first current input to the input end of the load switch (230);
a second error amplifier (302) based on the first voltage at the output end of the load switch (230);
a third error amplifier (303) based on the second voltage of the battery (250); and
a fourth error amplifier (304) based on the second current between the switching charger (240) and the battery (250);
wherein selecting the one error value includes selecting a smallest error value among the at least one error value.

15. The method of any one of claims 10 to 14, further comprising charging the battery (250) based on power input through the wired power transmission/reception port (220) and/or power received through the wireless power transmission/reception circuit (210).

## Patentansprüche

1. Elektronische Vorrichtung (101), umfassend:
eine drahtlose Energieübertragungs-/-empfangsschaltung (210);
einen drahtgebundenen Energieübertragungs-/-empfangsanschluss (220);
einen Lastschalter (230), der elektrisch mit dem drahtgebundenen Energieübertragungs-/- empfangsanschluss (220) verbunden ist;
ein Schaltladegerät (240), das elektrisch mit dem Lastschalter (230) und der drahtlosen Energieübertragungs-/-empfangsschaltung (210) verbunden ist;
eine Batterie (250), die elektrisch mit dem Schaltladegerät (240) verbunden ist; und
einen Prozessor (120),
wobei der Prozessor (120) zu Folgendem konfiguriert ist:
Identifizieren (401) eines ersten Stromeingangs zu einem Eingangsende des Lastschalters (230);
Identifizieren (403) einer ersten Spannung an einem Ausgangsende des Lastschalters (230);
Identifizieren (405) einer zweiten Spannung der Batterie (250);
Identifizieren (407) eines zweiten Stroms zwischen dem Schaltladegerät (240) und der Batterie (250);
**dadurch gekennzeichnet, dass**
der Prozessor (120) ferner zu Folgendem konfiguriert ist:
Identifizieren (409) einer Effizienz des Schaltladegeräts (240), wobei die Effizienz des Schaltladegeräts (240) die Größe der Energieausgabe von dem Schaltladegerät (240) relativ zu der Größe der Energieeingabe in das Schaltladegerät (240) ist;
Bestimmen (411) eines dritten Stroms an einem Ausgangsende (355) der drahtlosen Energieübertragungs-/-empfangsschaltung (210) basierend auf dem ersten Strom, der ersten Spannung, der zweiten Spannung, dem zweiten Strom und der Effizienz des Schaltladegeräts (240).

2. Elektronische Vorrichtung (101) nach Anspruch 1, wobei der Prozessor (120) dazu konfiguriert ist, die Effizienz durch Vergleichen digitaler Informationen, die von einem Analog-Digital-Wandler, ADC (354), bereitgestellt werden, der in der drahtlosen Energieübertragungs-/- empfangsschaltung (210) beinhaltet ist, mit dem bestimmten dritten Strom einzustellen.

3. Elektronische Vorrichtung (101) nach Anspruch 2, wobei der Prozessor (120) dazu konfiguriert ist, den dritten Strom an dem Ausgangsende (355) der drahtlosen Energieübertragungs-/-empfangsschaltung (210) basierend auf der eingestellten Effizienz neu zu bestimmen.

4. Elektronische Vorrichtung (101) nach einem der Ansprüche 1 bis 3, ferner umfassend:
mindestens einen Fehlerverstärker (301; 302; 303; 304); und
einen Mindestauswahlschalter (305),
wobei der Prozessor (120) dazu konfiguriert ist, das Schaltladegerät (240) basierend auf einem Fehlerwert zu steuern, der durch den Mindestauswahlschalter (305) aus mindestens einem Fehlerwert ausgewählt wird, der von dem mindestens einen Fehlerverstärker (301; 302; 303; 304) bereitgestellt wird.

5. Elektronische Vorrichtung (101) nach Anspruch 4, wobei der mindestens eine Fehlerverstärker (301; 302; 303; 304) Folgendes beinhaltet:
einen ersten Fehlerverstärker (301) basierend auf dem ersten Stromeingang zu dem Eingangsende des Lastschalters (230);
einen zweiten Fehlerverstärker (302) basierend auf der ersten Spannung an dem Ausgangsende des Lastschalters (230);
einen dritten Fehlerverstärker (303) basierend auf der zweiten Spannung der Batterie (250); und
einen vierten Fehlerverstärker (304) basierend auf dem zweiten Strom zwischen dem Schaltladegerät (240) und der Batterie (250);
wobei der Mindestauswahlschalter (305) dazu konfiguriert ist, einen kleinsten Fehlerwert aus dem mindestens einen Fehlerwert auszuwählen.

6. Elektronische Vorrichtung (101) nach einem der Ansprüche 1 bis 5, wobei der Prozessor (120) dazu konfiguriert ist, das Schaltladegerät (240), den Lastschalter (230) und die drahtlose Energieübertragungs-/-empfangsschaltung (210) zu steuern, um die Batterie (250) basierend auf einer Energieeingabe durch den drahtgebundenen Energieübertragungs-/-empfangsanschluss (220) und/oder Energie, die durch die drahtlose Energieübertragungs-/-empfangsschaltung (210) empfangen wird, zu laden.

7. Elektronische Vorrichtung (101) nach einem der Ansprüche 1 bis 6, wobei der Prozessor (120) dazu konfiguriert ist, das Schaltladegerät (240), den Lastschalter (230) und die drahtlose Energieübertragungs-/-empfangsschaltung (210) zu steuern, um Energie an die drahtlose Energieübertragungs-/-empfangsschaltung (210) basierend auf einer Energieeingabe durch den drahtgebundenen Energieübertragungs-/-empfangsanschluss (220) bereitzustellen.

8. Elektronische Vorrichtung (101) nach einem der Ansprüche 1 bis 7, wobei der Prozessor (120) dazu konfiguriert ist, das Schaltladegerät (240), den Lastschalter (230) und die drahtlose Energieübertragungs-/-empfangsschaltung (210) zu steuern, um Energie an den drahtgebundenen Energieübertragungs-/-empfangsanschluss (220) basierend auf Energie, die durch die drahtlose Energieübertragungs-/-empfangsschaltung (210) empfangen wird, bereitzustellen.

9. Elektronische Vorrichtung (101) nach einem der Ansprüche 1 bis 8, wobei der Prozessor (120) dazu konfiguriert ist, das Schaltladegerät (240), den Lastschalter (230) und die drahtlose Energieübertragungs-/-empfangsschaltung (210) zu steuern, um Energie an den drahtgebundenen Energieübertragungs-/-empfangsanschluss (220) und/oder die drahtlose Energieübertragungs-/- empfangsschaltung (210) basierend auf Energie, die von der Batterie (250) bereitgestellt wird, bereitzustellen.

10. Verfahren zum Betreiben einer elektronischen Vorrichtung (101), wobei das Verfahren Folgendes umfasst:
Identifizieren (401) eines ersten Stromeingangs zu einem Eingangsende eines Lastschalters (230), der elektrisch mit einem drahtgebundenen Energieübertragungs-/-empfangsanschluss (220) der elektronischen Vorrichtung (101) verbunden ist;
Identifizieren (403) einer ersten Spannung an einem Ausgangsende des Lastschalters (230);
Identifizieren (405) einer zweiten Spannung einer Batterie (250) der elektronischen Vorrichtung (101);
Identifizieren (407) eines zweiten Stroms zwischen einem Schaltladegerät (240) der elektronischen Vorrichtung (101) und der Batterie (250), wobei das Schaltladegerät (240) elektrisch mit einer drahtlosen Energieübertragungs-/-empfangsschaltung (210) der elektronischen Vorrichtung (101) und dem Lastschalter (230) verbunden ist; **gekennzeichnet durch**
Identifizieren (409) einer Effizienz des Schaltladegeräts (240); und
Bestimmen (411) eines dritten Stroms an einem Ausgangsende (355) der drahtlosen Energieübertragungs-/-empfangsschaltung (210) basierend auf dem ersten Strom, der ersten Spannung, der zweiten Spannung, dem zweiten Strom und der Effizienz des Schaltladegeräts (240).

11. Verfahren nach Anspruch 10, ferner umfassend:
Identifizieren digitaler Informationen, die von einem ADC 354 bereitgestellt werden, der in der drahtlosen Energieübertragungs-/-empfangsschaltung (210) beinhaltet ist;
Vergleichen der digitalen Informationen mit dem bestimmten dritten Strom; und
Einstellen der Effizienz basierend auf einem Ergebnis des Vergleichs.

12. Verfahren nach Anspruch 11, ferner umfassend das erneute Bestimmen des dritten Stroms an dem Ausgangsende (355) der drahtlosen Energieübertragungs-/-empfangsschaltung (210) basierend auf der eingestellten Effizienz.

13. Verfahren nach einem der Ansprüche 10 bis 12, ferner umfassend:
Auswählen eines Fehlerwerts aus mindestens einem Fehlerwert, der von mindestens einem Fehlerverstärker (301; 302; 303; 304) der elektronischen Vorrichtung (101) bereitgestellt wird, unter Verwendung eines Mindestauswahlschalters (305) der elektronischen Vorrichtung (101); und
Steuern des Schaltladegeräts (240) basierend auf dem ausgewählten Fehlerwert.

14. Verfahren nach Anspruch 13, wobei der mindestens eine Fehlerverstärker (301; 302; 303; 304) Folgendes beinhaltet:
einen ersten Fehlerverstärker (301) basierend auf dem ersten Stromeingang zu dem Eingangsende des Lastschalters (230);
einen zweiten Fehlerverstärker (302) basierend auf der ersten Spannung an dem Ausgangsende des Lastschalters (230);
einen dritten Fehlerverstärker (303) basierend auf der zweiten Spannung der Batterie (250); und
einen vierten Fehlerverstärker (304) basierend auf dem zweiten Strom zwischen dem Schaltladegerät (240) und der Batterie (250);
wobei das Auswählen des einen Fehlerwerts das Auswählen eines kleinsten Fehlerwerts aus dem mindestens einen Fehlerwert beinhaltet.

15. Verfahren nach einem der Ansprüche 10 bis 14, ferner umfassend das Laden der Batterie (250) basierend auf einer Energieeingabe durch den drahtgebundenen Energieübertragungs-/- empfangsanschluss (220) und/oder Energie, die durch die drahtlose Energieübertragungs-/- empfangsschaltung (210) empfangen wird.

## Revendications

1. Dispositif électronique (101) comprenant :
un circuit d'émission/réception d'énergie sans fil (210) ;
un port d'émission/réception d'énergie filaire (220) ;
un commutateur de charge (230) connecté électriquement au port d'émission/réception d'énergie filaire (220) ;
un chargeur de commutation (240) connecté électriquement au commutateur de charge (230) et au circuit d'émission/réception d'énergie sans fil (210) ;
une batterie (250) connectée électriquement au chargeur de commutation (240) ; et
un processeur (120),
ledit processeur (120) étant configuré pour :
identifier (401) une première entrée de courant à une extrémité d'entrée du commutateur de charge (230) ;
identifier (403) une première tension au niveau d'une extrémité de sortie du commutateur de charge (230) ;
identifier (405) une seconde tension de la batterie (250) ;
identifier (407) un deuxième courant entre le chargeur de commutation (240) et la batterie (250) ;
**caractérisé en ce que**
le processeur (120) est en outre configuré pour :
identifier (409) une efficacité du chargeur de commutation (240), ladite efficacité du chargeur de commutation (240) étant l'amplitude de la sortie d'énergie du chargeur de commutation (240) par rapport à l'amplitude de l'entrée d'énergie vers le chargeur de commutation (240) ;
déterminer (411) un troisième courant au niveau d'une extrémité de sortie (355) du circuit d'émission/réception d'énergie sans fil (210) sur la base du premier courant, de la première tension, de la seconde tension, du deuxième courant et de l'efficacité du chargeur de commutation (240).

2. Dispositif électronique (101) selon la revendication 1, ledit processeur (120) étant configuré pour régler l'efficacité en comparant des informations numériques fournies par un convertisseur analogique-numérique, CAN, (354), compris dans le circuit d'émission/réception d'énergie sans fil (210) avec le troisième courant déterminé.

3. Dispositif électronique (101) selon la revendication 2, ledit processeur (120) étant configuré pour redéterminer le troisième courant au niveau de l'extrémité de sortie (355) du circuit d'émission/réception d'énergie sans fil (210) sur la base de l'efficacité réglée.

4. Dispositif électronique (101) selon l'une quelconque des revendications 1 à 3, comprenant en outre :
au moins un amplificateur d'erreur (301 ; 302 ; 303 ; 304) ; et
un dispositif de sélection minimale (305),
ledit processeur (120) étant configuré pour commander le chargeur de commutation (240) sur la base d'une valeur d'erreur sélectionnée par le dispositif de sélection minimal (305) parmi au moins une valeur d'erreur fournie par ledit au moins un amplificateur d'erreur (301 ; 302 ; 303 ; 304).

5. Dispositif électronique (101) selon la revendication 4, ledit au moins un amplificateur d'erreur (301 ; 302 ; 303 ; 304) comprenant :
un premier amplificateur d'erreur (301) basé sur la première entrée de courant à l'extrémité d'entrée du commutateur de charge (230) ;
un deuxième amplificateur d'erreur (302) basé sur la première tension au niveau de l'extrémité de sortie du commutateur de charge (230) ;
un troisième amplificateur d'erreur (303) basé sur la seconde tension de la batterie (250) ; et
un quatrième amplificateur d'erreur (304) basé sur le deuxième courant entre le chargeur de commutation (240) et la batterie (250) ;
ledit dispositif de sélection minimale (305) étant configuré pour sélectionner la valeur d'erreur la plus petite parmi ladite au moins une valeur d'erreur.

6. Dispositif électronique (101) selon l'une quelconque des revendications 1 à 5, ledit processeur (120) étant configuré pour commander le chargeur de commutation (240), le commutateur de charge (230) et le circuit d'émission/réception d'énergie sans fil (210) pour charger la batterie (250) sur la base d'une entrée d'énergie par l'intermédiaire du port d'émission/réception d'énergie filaire (220) et/ou de l'énergie reçue par l'intermédiaire du circuit d'émission/réception d'énergie sans fil (210).

7. Dispositif électronique (101) selon l'une quelconque des revendications 1 à 6, ledit processeur (120) étant configuré pour commander le chargeur de commutation (240), le commutateur de charge (230) et le circuit d'émission/réception d'énergie sans fil (210) pour fournir de l'énergie au circuit d'émission/réception d'énergie sans fil (210) sur la base d'une entrée d'énergie par l'intermédiaire du port d'émission/réception d'énergie filaire (220).

8. Dispositif électronique (101) selon l'une quelconque des revendications 1 à 7, ledit processeur (120) étant configuré pour commander le chargeur de commutation (240), le commutateur de charge (230) et le circuit d'émission/réception d'énergie sans fil (210) pour fournir de l'énergie au port d'émission/réception d'énergie filaire (220) sur la base de l'énergie reçue par l'intermédiaire du circuit d'émission/réception d'énergie sans fil (210).

9. Dispositif électronique (101) selon l'une quelconque des revendications 1 à 8, ledit processeur (120) étant configuré pour commander le chargeur de commutation (240), le commutateur de charge (230) et le circuit d'émission/réception d'énergie sans fil (210) pour fournir de l'énergie au port d'émission/réception d'énergie filaire (220) et/ou au circuit d'émission/réception d'énergie sans fil (210) sur la base de l'énergie fournie par la batterie (250).

10. Procédé permettant le fonctionnement d'un dispositif électronique (101), le procédé comprenant :
l'identification (401) d'une première entrée de courant à une extrémité d'entrée d'un commutateur de charge (230) connecté électriquement à un port d'émission/réception d'énergie filaire (220) du dispositif électronique (101) ;
l'identification (403) d'une première tension au niveau d'une extrémité de sortie du commutateur de charge (230) ;
l'identification (405) d'une seconde tension d'une batterie (250) du dispositif électronique (101) ;
l'identification (407) d'un deuxième courant entre un chargeur de commutation (240) du dispositif électronique (101) et la batterie (250), le chargeur de commutation (240) étant connecté électriquement à un circuit d'émission/réception d'énergie sans fil (210) du dispositif électronique (101) et du commutateur de charge (230) ;
**caractérisé par**
l'identification (409) de l'efficacité du chargeur de commutation (240) ; et
la détermination (411) d'un troisième courant au niveau d'une extrémité de sortie (355) du circuit d'émission/réception d'énergie sans fil (210) sur la base du premier courant, de la première tension, de la seconde tension, du deuxième courant et de l'efficacité du chargeur de commutation (240).

11. Procédé selon la revendication 10, comprenant en outre :
l'identification d'informations numériques fournies par un CAN 354 compris dans le circuit d'émission/réception d'énergie sans fil (210) ;
la comparaison des informations numériques avec le troisième courant déterminé ; et
le réglage de l'efficacité en fonction du résultat de la comparaison.

12. Procédé selon la revendication 11, comprenant en outre la redétermination du troisième courant au niveau de l'extrémité de sortie (355) du circuit d'émission/réception d'énergie sans fil (210) sur la base de l'efficacité réglée.

13. Procédé selon l'une quelconque des revendications 10 à 12, comprenant en outre :
la sélection d'une valeur d'erreur parmi au moins une valeur d'erreur fournie par au moins un amplificateur d'erreur (301 ; 302 ; 303 ; 304) du dispositif électronique (101) à l'aide d'un dispositif de sélection minimal (305) du dispositif électronique (101) ; et
la commande du chargeur de commutation (240) sur la base de la valeur d'erreur sélectionnée.

14. Procédé selon la revendication 13, ledit au moins un amplificateur d'erreur (301 ; 302 ; 303 ; 304) comprenant :
un premier amplificateur d'erreur (301) basé sur la première entrée de courant à l'extrémité d'entrée du commutateur de charge (230) ;
un deuxième amplificateur d'erreur (302) basé sur la première tension au niveau de l'extrémité de sortie du commutateur de charge (230) ;
un troisième amplificateur d'erreur (303) basé sur la seconde tension de la batterie (250) ; et
un quatrième amplificateur d'erreur (304) basé sur le deuxième courant entre le chargeur de commutation (240) et la batterie (250) ;
ladite sélection de ladite une valeur d'erreur comprenant la sélection de la valeur d'erreur la plus petite parmi ladite au moins une valeur d'erreur.

15. Procédé selon l'une quelconque des revendications 10 à 14, comprenant en outre la charge de la batterie (250) sur la base d'une entrée d'énergie par l'intermédiaire du port d'émission/réception d'énergie filaire (220) et/ou de l'énergie reçue par l'intermédiaire du circuit d'émission/réception d'énergie sans fil (210).
